# EUROPÄISCHE PATENTSCHRIFT

(11) **EP 2 709 744 B1**
(45) Veröffentlichungstag und Bekanntmachung des Hinweises auf die Patenterteilung: **02.08.2017**
(21) Anmeldenummer: 12722339.4
(22) Anmeldetag: 16.05.2012
(51) Int. Cl.: B01J 20/28, B01J 20/22, B01J 20/30, B01D 53/02, B01J 2/08, B01J 13/00

(54) **VERFAHREN ZUR HERSTELLUNG VON PARTIKELN ENTHALTEND METALL-ORGANISCHE GERÜSTVERBINDUNGEN**
PROCESS FOR PRODUCING PARTICLES COMPRISING METAL-ORGANIC FRAMEWORK COMPOUNDS
PROCÉDÉ DE PRÉPARATION DE RÉSEAUX MÉTALLO-ORGANIQUES CONTENANT DES PARTICULES

(30) Priorität: 18.05.2011 DE 102011076080
(43) Veröffentlichungstag der Anmeldung: 26.03.2014
(73) Patentinhaber: Technische Universität Dresden, 01062 Dresden (DE)
(72) Erfinder: LOHE, Martin, R., 01187 Dresden (DE); ROSE, Markus, 52074 Aachen (DE); KASKEL, Stefan, 01159 Dresden (DE); SENKOVSKA, Irena, 01169 Dresden (DE)
(74) Vertreter: Kailuweit & Uhlemann Patentanwälte Partnerschaft mbB
(86) Internationale Anmeldenummer: PCT/EP2012/059094
(87) Internationale Veröffentlichungsnummer: WO 2012/156436

(56) Entgegenhaltungen:
- BUSO D ET AL: "Fast synthesis of MOF-5 microcrystals using sol-gel SiO2 nanoparticles", CHEMISTRY OF MATERIALS 20110222 AMERICAN CHEMICAL SOCIETY USA, Bd. 23, Nr. 4, 22. Februar 2011 (2011-02-22), Seiten 929-934, XP002680299, DOI: DOI:10.1021/CM101519S
- HORCAJADA P ET AL: "Colloidal route for preparing optical thin films of nanoporous metal-organic frameworks", ADVANCED MATERIALS 20090518 WILEY-VCH VERLAG DEU, Bd. 21, Nr. 19, 18. Mai 2009 (2009-05-18), Seiten 1931-1935, XP002680300, DOI: DOI:10.1002/ADMA.200801851
- FALCARO P ET AL: "Amino functionalized SiO2 nanoparticles for seeding MOF-5", IOP CONFERENCE SERIES: MATERIALS SCIENCE AND ENGINEERING - NOVEL CHEMICAL PROCESSING; CHEMICAL TECTONICS FOR MATERIALS DESIGN 2011 INSTITUTE OF PHYSICS PUBLISHING GBR, Bd. 18, Nr. SYMPOSIUM 2C, 14. November 2010 (2010-11-14), XP002680301, DOI: DOI:10.1088/1757-899X/18/5/052006

## Beschreibung

Die Erfindung betrifft ein Verfahren zur Herstellung von Partikeln enthaltend Metall-organische Gerüstverbindungen.

Metall-organische Gerüstverbindungen (engl.: metal-organic framework (MOF)) gehen zurück auf die Synthese von MOF-5 von Yaghi et al. aus den 1990'ern (s. auch US 5,648,508) und stellen somit eine recht junge Materialklasse dar, die aufgrund ihrer ausgezeichneten Eigenschaften derzeit intensiv untersucht wird. MOFs, die zu den Koordinationspolymeren gezählt werden können, bestechen durch ihren modularen Aufbau bestehend aus sogenannten Konnektoren, die meist von Übergangsmetallionen oder -clustern gebildet werden und über multifunktionelle Linker, meist organische Moleküle, miteinander verbunden sind.

Als metallorganische Gerüstverbindungen (Metal-Organic Frameworks, MOFs) werden hochporöse Materialien bezeichnet, die eine kristalline Struktur, bestehend aus metallischen Clustern ("Knoten") und Liganden in Form organischer Moleküle ("Linker") als Grundbauelemente (vgl. auch metallorganische Verbindungen), aufweisen. Durch Variation der organischen Linker kann die Porengröße im Nanometerbereich eingestellt werden.

Als Applikationen von MOFs werden heute Gasspeicherung, Gastrennprozesse, Medizintechnik bis hin zu Biomaterialien und Sensorik, aber auch Katalysatoren und Optoelektronik diskutiert. Ihre Stärke liegt in der extrem großen Porosität in Kombination mit molekularen Baugruppen, die spezifische Interaktionen mit zu adsorbierenden Molekülen eingehen können (s. auch Kaskel S. 2010 Chemie Ingenieur Technik 82(7):1019-1023).

Für die industrielle Anwendung ist es wichtig, die MOFs in einer Form bereitzustellen, die sie für viele Anwendungen brauchbar macht. MOFs werden nach dem Stand der Technik jedoch meistens als kristallines Pulver erhalten. Für die jeweilige Anwendung muss dieses meist mit Bindemitteln versehen und pelletiert werden (s. z. B. US 6,893,564 B2). Nachteilig können Bindemittel jedoch die spezifische Oberfläche und das Porenvolumen durch Pore-Blocking-Effekte reduzieren. Bindemittel sind Stoffe, durch die Feststoffe mit einem feinen Zerteilungsgrad (z. B. Pulver) miteinander bzw. auf einer Unterlage verklebt werden. Bindemittel werden meist in flüssiger Form den zu bindenden Feststoffen zugesetzt.

Schoedel A. et al. 2010 (Angew. Chem. Int Ed. 49:7225-7728) beschreiben einen Ansatz zur Herstellung von Einschicht-MOF-Filmen durch Grenzphasenreaktion. Dazu wird ein metallionenhaltiges Polyethylenglykolgel mit einer Lösung des Linkers überschichtet. Dabei entsteht ein MOF-Nanofilm, mit wenigen oder nur einer einzigen kristallografischen Orientierung und einer Dicke von 500 bis 550 nm. Für die Herstellung von MOFs in industriellem Maßstab ist das beschriebene Verfahren ungeeignet. Da die Bildung der MOFs zudem nur an der Grenzschicht erfolgt, können keine MOFs mit dreidimensionaler Form erzeugt werden.

Lohe R et al. 2009 (Chem. Commun. 2009. 6056-6058) beschreiben die Herstellung monolithischer MOF-Aerogele und Xerogele.

Küsgens P et al. (J. Am. Ceram. Soc. 93 (9): 2476 - 2479) beschreiben die Herstellung von monolithischen Strukturen die MOFs enthalten durch Coextrusion oder durch Abscheidung von Cu₃(Benzoltricarboxylat)₂ auf Wabenstrukturen aus Cordierit.

Imaz et al. 2009 (Angew. Chem. Int Ed. 48:2325-2329) beschreiben die Synthese von Metall-organischen Kugeln durch Zugabe einer wässrigen Zn(II)-Salzlösung zur ethanolischen Lösung eines zweizähnigen Brückenliganden unter heftigem Rühren. Die Kugeln weisen dabei eine Größe von 100 bis 1500nm auf und sind somit für industrielle Anwendungen nur bedingt geeignet.

Schwab M G et al. 2008 (Adv. Engineer. Mat 10(12), 1151 - 1155) beschreiben ein Verfahren zur Einbindung von metall-organischen Gerüstverbindungen in ein makroporöses monolithisches PolyHIPE. Durch die Imprägnierung der inneren Oberfläche des PolyHIPE mit MOFs wird die ohnehin große spezifische Oberfläche der PolyHIPEs durch Aufbringen der MOF -Beschichtung weiter erhöht und so ein Kompositmaterial mit neuen Adsorptionseigenschaften erhalten. Die Herstellung einzeln vorliegender MOFs wird nicht beschrieben. Buso et al. (AMERICAN CHEMICAL SOCIETY USA, Bd. 23(4), 929-934) offenbaren die Herstellung von Si02-Nanopartikel durch die Umsetzung von Tetraethoxysilan in einem klassischen Sol-Gel-Verfahren. Die Nanopartikel (NP) werden anschließend als Kristallkeime für die Bildung von MOF-Kristallen verwendet. Dazu werden die NP entweder in einer MOF- Precursorlösung suspendiert. Alternativ werden die NP auf einem SiliciumWafer immobilisiert und getrocknet und anschließend mit einer MOF-Precursorlösung in Kontakt gebracht. Horcajada et al. (ADVANCED MATERIALS, Bd. 21(19), 1931-1935) offenbaren eine Methode zur Herstellung von dünnen Filmen, welche Nanopartikel und MOFs enthalten. Dazu wird ein poliertes Silicium-Wafer-Substrat in eine kolloide MOF-Precursorlösung, welche Nanopartikel enthält, eingetaucht oder die kolloide MOFPrecursorlösung auf einer Glasoberfläche ausgeliert. Aufgabe der Erfindung ist die Bereitstellung von Partikeln, insbesondere sphäroidalen Partikeln, enthaltend Metall-Organischen Gerüstverbindungen (MOF) ohne Zuhilfenahme von Bindemitteln, welche die spezifische Oberfläche und das Porenvolumen durch Pore-Blocking-Effekte reduzieren können.

Erfindungsgemäß wird die Aufgabe gelöst durch ein Verfahren zur Herstellung von Partikeln enthaltend Metall-Organischen Gerüstverbindungen (MOF) durch Gelierung einer MOF-Gel-Precusorlösung, dadurch gekennzeichnet, dass die Gelierung
a. in einem mit der MOF-Gel-Precusorlösung nicht mischbaren Fluid oder
b. in Poren einer makroporösen Matrix
erfolgt und anschließend eine Trocknung erfolgt.

Die hergestellten Partikel liegen in Form eines getrockneten Gels, insbesondere eines Xerogels oder eines Aerogels vor.

Vorteilhaft erfolgt die Gelierung ohne Zusätze von Bindemittel. Insbesondere werden keine Silane, Silicate, Graphit, alumniumhaltigen Komponenten, Kaolin (oder andere keramische Binder), Polysiloxane, Polymethylmethacrylat, Polyvinylalkohol, Polyacrylsäure, Stärke (oder andere synthetische oder natürliche Polymere) zugesetzt.

Die MOF-Gel-Precusorlösung enthält mindestens ein Metallsalz, mindestens einen Linker, bevorzugt ein organischer Linker, sowie mindestens ein, bevorzugt polares, Lösungsmittel.

Geeignete Metallsalze, Linker und Lösungsmittel sind dem Fachmann bekannt.

Bezüglich geeigneter Linker und Metallsalze wird insbesondere auf US 6,893,564, insbesondere Spalte 3, Zeilen 8ff für die Linker ("bidentate organic compounds") und insbesondere Spalte 2 Z. 40ff Metallsalze ("metal component"), und US 5,648,508, insbesondere Spalte 11, Zeilen 10-51, Abschnitt "The Metal Ions" für die Metallsalze und Spalte 5 Zeile 61 bis Spalte 11 Z. 7, Abschnitt "The Ligands" für die Linker, verwiesen, die hiermit durch Bezugnahme ausdrücklich mit einbezogen werden.

In Variante a wird die MOF-Gel-Precusorlösung zur Gelierung bevorzugt in das nicht mischbare Fluid eingetropft. Die Tropfen haben bevorzugt einen Durchmesser von 0,1 bis 10mm, bevorzugt, 0,5 bis 5 mm.

Nicht mischbares Fluid bedeutet, dass dieses mit der MOF-Gel-Precusorlösung kein homogenes Gemisch bildet, insbesondere keine Lösung. Das nicht mischbare Fluid ist ein Gas oder bevorzugt eine Flüssigkeit. Bevorzugte nicht mischbare Gase sind ausgewählt aus Luft, Stickstoff, Argon und Kohlendioxid sowie anderen Gasen die keine Reaktion mit der MOF-Gel-Precursorlösung eingehen. Bevorzugte nicht mischbare Flüssigkeiten sind ausgewählt aus Silikonen, Alkanen (bevorzugt C6-C20), Alkenen (bevorzugt C6-C20), Fetten und Ölen (bevorzugt C12-C24), Perfluorkohlenwasserstoffen oder Mischungen dieser Flüssigkeiten oder anderen nicht mischbaren Flüssigkeiten.

Zur Herstellung der MOF-Gel-Precusorlösung werden bevorzugt 0,5 bis 5 g Metallsalz (bevorzugt Eisennitrat-nonahydrat) und 0,2 bis 2 g Linker (bevorzugt Trimesinsäure) in 20 ml Lösungsmittel (vorzugsweise ein C1-C5-Alkohol-/Wassergemisch, bevorzugt ein Ethanol-/Wassergemisch, besonders bevorzugt 99:1 bis 1:1 Ethanol (vol): Wasser (vol), weiter bevorzugt 25: 1 bis 2:1 Ethanol) gelöst.

Bevorzugt erfolgt eine Kühlung auf -20°C (insbesondere bei niedrigen Konzentrationen) bis -80°C, bevorzugt auf -30°C bis -80°C. Die kalten Lösungen werden gemischt.

Die so erhaltene gekühlte MOF-Gel-Precursorlösung wird daraufhin tropfenweise in das nicht mischbare Fluid (bevorzugt Silikonöl) mit einer Temperatur von -20°C (sehr langsame Gelierung) bis 78°C (schnelle Gelierung) eingetropft. Die Temperatur wird dabei generell unterhalb des Siedepunktes des verwendeten Lösungsmittels gewählt. Die so gebildeten, gelierten MOF-Gelkugeln werden anschließend vom nichtmischbaren Fluid getrennt, gewaschen und getrocknet.

Vorteilhaft liegen alle Stoffe, die für die Herstellung benötigt werden schon in der Precursorlösung vor. Die Reaktion zum MOF und die Erstarrung des Gels setzen aufgrund einer Temperaturerhöhung und in kurzer Zeit ein. Das nicht mischbare Fluid wird ausschließlich zur Formgebung (Tropfenbildung) genutzt. Dies bietet neben einer schnelleren Reaktionsgeschwindigkeit die Vorteile einer definierbaren Partikelgrößeneinstellung, die Möglichkeit Gase als nicht mischbares Fluid einzusetzen (bspw. in einem Sprühturm o.ä.) und die Möglichkeit das nicht mischbare Fluid zu zirkulieren ohne es aufreinigen zu müssen (ökologischer und ökonomischer Vorteil).

Vorteilhaft kann das erfindungsgemäße Verfahren bei Normaldruck durchgeführt werden.

Durch Variante a des Verfahrens wird ein Partikel erzeugt, in dem die MOFs in Form eines Aerogel oder Xerogel vorliegen. Ein Aerogel wird bevorzugt durch Trocknung mit überkritischem Kohlendioxid oder anderem überkritischen Medium erzeugt. Das Xerogel wird durch eine gängige Trocknung (bevorzugt bei 40 °C bis 100 °C z. B. Trockenschrank oder Vakuumtrocknung) erhalten.

In Variante b erfolgt die Gelierung in Poren einer makroporösen Matrix. Dazu wird die MOF-Gel-Precusorlösung in die makroporöse Matrix eingegossen, geliert dort und füllt die Poren (nahezu) aus. Die makroporöse Matrix wird bevorzugt komplett mit der MOF-Gel-Precursorlösung ausgefüllt. Die Gelierung erfolgt bevorzugt durch Inkubation bei Temperaturen zwischen -40 und 150 °C, vorzugsweise 20 bis 120°C, besonders bevorzugt 20 bis 80 °C. Je höher die Temperatur, desto schneller erfolgt die Gelierung. Die Inkubationszeit beträgt bevorzugt mindestens 1 Sekunde und weiter bevorzugt mindestens 2 Stunden, und bevorzugt nicht mehr als 72 Stunden. Nach oben sind der Inkubationszeit im Prinzip keine Grenzen gesetzt, aus wirtschaftlichen Gründen beträgt diese jedoch bevorzugt bis zu 70 Stunden, weiter bevorzugt bis 40 Stunden. Anschließend wird das gebildete Gel bevorzugt gewaschen und getrocknet, wodurch sich die Größe der Partikel verringert. Wahlweise vor oder nach der Trocknung erfolgt noch ein Waschen der Gele oder Partikel um nicht umgesetzte Ausgangsstoffe zu entfernen, welche sonst die Poren verstopfen könnten. Die Trocknung erfolgt (in Abhängigkeit des verwendeten Lösemittels) bevorzugt bei Temperaturen zwischen 10 und 160 °C, vorzugsweise 30 bis 80 °C unter Normaldruck oder Vakuum Nach dem Trocknen werden die Partikel von der Matrix abgetrennt. Vorteilhaft und überraschend haben die Erfinder festgestellt, dass das Abtrennen der Partikel durch einfaches Herausschütteln der Partikel aus der Matrix erfolgen kann.

Das Templat-Schaum und MOF-Gel-Precursorlösung enthaltende Gefäß wird verschlossen und 12h bei 80-100°C getempert um die Gelierung der MOF-Gel-Precursorlösung zu ermöglichen. Das erhaltene MOF-Gel-Metallschaum-Komposit wird mit Ethanol gewaschen und anschließend bei 80°C an Luft getrocknet. Die erhaltenen geschrumpften Xerogel-Partikel können danach aus dem Schaumtemplat herausgeschüttelt und das Templat für weitere Partikelherstellung wiederverwendet werden.

Durch Variante b des Verfahrens wird ein Partikel erzeugt, in dem die MOFs in Form eines Xerogel vorliegen.

Die makroporöse Matrix ist bevorzugt ein makroporöser Schaum, bevorzugt aus Metall, Keramik oder Kunststoff, oder eine andere makroporöse dreidimensionale Struktur (bevorzugt aus Metall, Keramik, Kunstoff, Glas oder Textilien) mit einer bevorzugten Porengröße, im Bereich von 0,1-15 mm, bevorzugt im Bereich 1-8 mm (Porendurchmesser). Um einheitliche Partikelgrößen zu erhalten, sollten die Porengrößen möglichst gleichmäßig sein. Alternativ oder zusätzlich können die hergestellten Partikel auch durch ein anschließendes Siebverfahren nach ihrer Größe getrennt werden.

Die Lösungsmittel (für die Herstellung der MOF-Gel-Precusorlösung und das Waschen des gebildeten Gels) in dieser Variante sind bevorzugt ausgewählt aus Wasser, Alkoholen, DMF (Dimethylformamid), DEF (Diethylformamid), Ethern, Estern, Aminen, Pyrrolidonen und Mischungen dieser Lösungsmittel, besonders bevorzugt sind, Wasser, Alkohole, DMF und/oder DEF.

Nachfolgend werden für beide zuvor beschriebenen Varianten bevorzugte Komponenten der MOF-Gel-Precusorlösung beschrieben:
Das Metallsalz in der MOF-Gel-Precusorlösung ist bevorzugt ausgewählt aus Salzen der Metalle der Gruppen 1, 2, 3, 4, 5, 6, 7, 8, 9, 10, 11, 12, 13, 14, 15 und 16 des Periodensystems der Elemente (frühere CAS-Gruppen I A, II A , III A, IV B bis VIII B, und I B to VI B), insbesondere Mg, Ca, Sr, Ba, Sc, Y, Ti, Zr, Hf, V, Nb, Ta, Cr, Mo, W, Mn, Re, Fe, Ru, Os, Co, Rh, Ir, Ni, Pd, Pt, Cu, Ag, Au, Zn, Cd, Hg, Al, Ga, In, Tl, Si, Ge, Sn, Pb, As, Sb, Bi und Lanthanoide, vorzugsweise Fe, Al, Zn, Cu, Ni, Pd, Pt, Ru, Rh, Co, Ce und La. Bevozugte Metallionen sind ausgewählt aus Mg²⁺, Ca²⁺, Sr²⁺, Ba²⁺, Sc^{3+,} Y³⁺, Ti⁴⁺, Zr⁴⁺, Hf⁴⁺, V⁴⁺, V³⁺, V²⁺, Nb³⁺, Ta³⁺, Cr³⁺, Mo³⁺, W³⁺, M³⁺, Mn²⁺, Re³⁺, Re²⁺, Fe³⁺, Fe²⁺, Ru³⁺, Ru²⁺, Os³+, Os²⁺, Co³⁺, Co²⁺, Rh²⁺, Rh⁺, Ir²⁺, Ir⁺, Ni²⁺, Ni⁺, Pd²⁺, Pd⁺, Pt²⁺, Pt⁺, Cu²⁺, Cu⁺, Fe²⁺, Ru³⁺, Ru²⁺, Os³⁺, Os²⁺, Co³⁺, Co²⁺, Rh²⁺, Rh⁺, Ir²⁺, Ir⁺, Ni²⁺, Ni⁺, Pd²⁺, Pd⁺, Pt²⁺, Pt⁺, Cu²⁺, Cu⁺, Ag⁺, Au⁺, Zn²⁺, Cd²⁺, Hg²⁺, Al³⁺, Ga³⁺, In³⁺, Tl³⁺, Si⁴⁺, Si²⁺, Ge⁴⁺, Ge²⁺, Sn⁴⁺, Sn²⁺, Pb⁴⁺, Pb²⁺, As⁵⁺, As³⁺ As⁺, Sb⁵⁺, Sb³⁺, Sb⁺, Bi⁵⁺, Bi³⁺, Bi⁺ Ce³⁺, Ce⁴⁺ und La³⁺.

Besonders bevorzugt sind Metallsalze der Metalle ausgewählt aus Fe (als Fe³⁺ oder Fe²⁺), Al (als Al³⁺) und Cu (als Cu²⁺ oder Cu⁺), vorzugsweise als Nitrat, Acetat, Sulfat oder Halogenid
Der Linker in der MOF-Gel-Precusorlösung ist bevorzugt ausgewählt aus cyclischen Resten vorzugsweise Arylresten oder Heteroarylresten, mit 5 bis 20 C-Atomen und 2 bis 5, bevorzugt 2 oder 3, polaren Gruppen oder Stickstoffatomen. Die polaren Gruppen sind bevorzugt Carboxylgruppen, Carbonyl oder Stickstoffatome, Nitrilgruppen. Besonders bevorzugte Linker sind ausgewählt aus aromatischen Polycarbonsäuren, bevorzugt aromatischen Dicarbonsäuren oder aromatischen Tricarbonsäuren, insbesondere Terephthalsäure (1,4-Benzoldicarbonsäure), 2,5-Dihydroxyterephtalsäure, Trimesinsäure (1,3,5-Benzoltricarbonsäure), R6-bdc (1,2-Dihydrocyclobuta-benzol-3,6-dicarbonsäure), Naphthalin-2,6-dicarbonsäure, Naphtalin-1,4-dicarbonsäure, Benzol-1,3,5-tribenzoat, 4,4'-Biphenyldicarbonsäure und den Salzen dieser Säuren.

Weitere Beispiele für bevorzugte Linker sind nachfolgend aufgeführt:

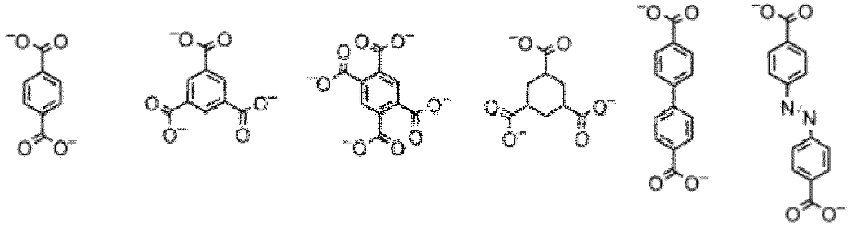

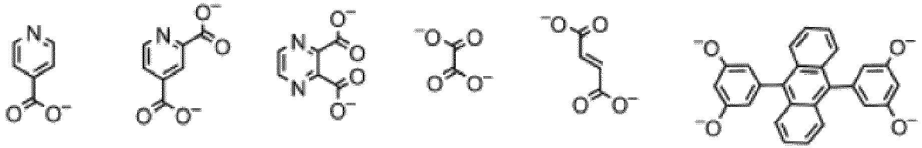

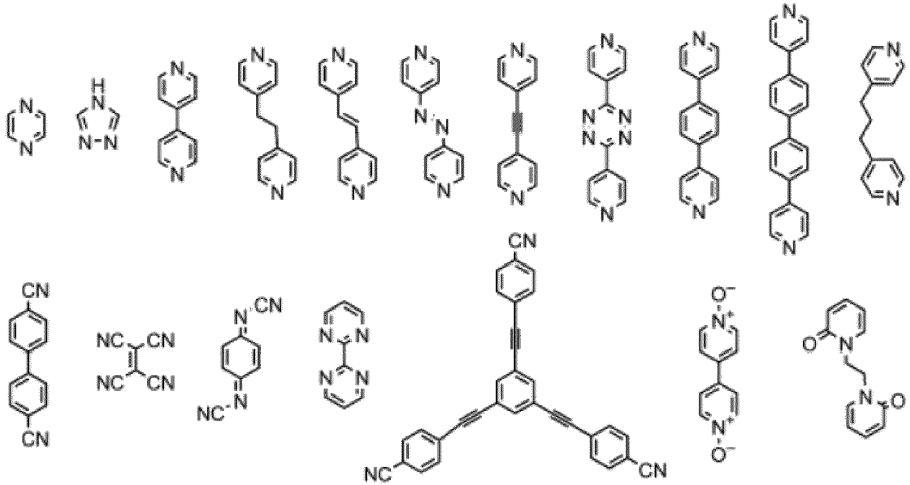

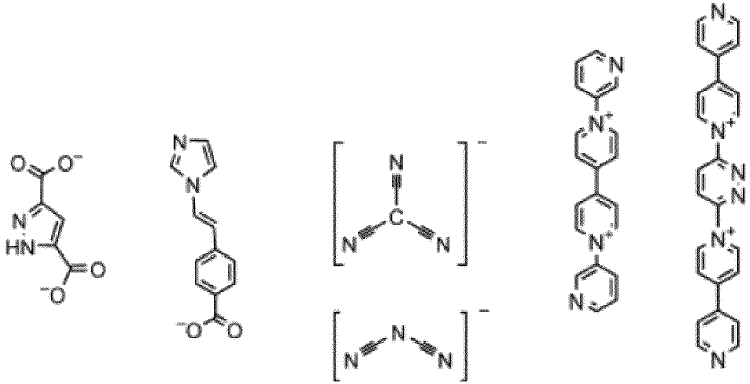

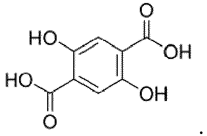

In einer bevorzugten Variante des erfindungsgemäßen Verfahrens werden Mischungen der oben genannten Linker und/oder Mischungen der oben genannten Linker mit Co-Linkern eingesetzt.

Bevorzugte Co-Linker sind ausgewählt aus polar substituierten aromatischen Dicarbonsäuren, insbesondere 5-substituierte Isophthalsäure. Bevorzugte polare Substituenten sind ausgewählt aus Amino-, Hydroxy-, Nitrogruppen und Halogeniden, insbesondere Bromid. Besonders bevorzugte Co-Linker sind ausgewählt aus: 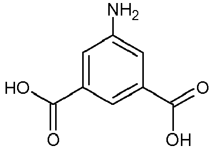 5-Aminoisophthalsäure (CAS: 99-31-0), 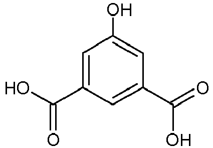 5-Hydroxyisophthalsäure (CAS: 618-83-7) 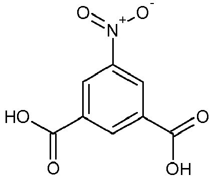 5-Nitroisophthalsäure (CAS: 618-88-2), 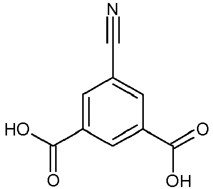 5-Cyanoisophthalsäure (CAS: 23341-13-1), 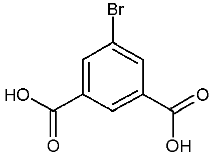 5-Bromoisophthalsäure (CAS: 23351-91-9).

Das Lösungsmittel in der MOF-Gel-Precusorlösung ist bevorzugt ausgewählt aus Wasser, Alkoholen, DMF (Dimethylformamid), DEF (Diethylformamid), Ethern, Estern, Pyrrilidonen und Mischungen dieser Lösungsmittel, besonders bevorzugt sind, Wasser, Alkohole, DMF und/oder DEF.

Die Konzentration von Metallsalz in der MOF-Gel-Precusorlösung liegt bevorzugt im Bereich 0,01 Mol/L bis 10 Mol/L, bevorzugt 0,05 bis 5 Mol/L, besonders bevorzugt 0,1 bis 2 Mol/L.

Die Konzentration von Linker in der MOF-Gel-Precusorlösung liegt bevorzugt im Bereich 0,01 Mol/L bis 10 Mol/L, bevorzugt 0,05 bis 5 Mol/L, besonders bevorzugt 0,1 bis 2 Mol/L.

Die Konzentration von Mischungen von Linkern und Co-Linkern in der MOF-Gel-Precusorlösung liegt bevorzugt im Bereich 0,01 Mol/L bis 10 Mol/L, bevorzugt 0,05 bis 5 Mol/L, besonders bevorzugt 0,1 bis 2 Mol/L.

Die relativ hohen Konzentrationen an Metallsalz und Linker bieten neben der kürzeren Reaktionszeit den Vorteil einer deutlich höheren Raum/Zeit-Ausbeute.

Gegenstand der Erfindung sind auch die mit dem erfindungsgemäßen Verfahren hergestellten Partikel.

Die hergestellten Partikel sind bevorzugt annähernd kugelförmig oder sphäroidal. Die hergestellten Partikel sind nicht kristallin, sondern liegen in einem Gel-Monolith in amorpher Form vor. Die Abmessungen der Partikel wird bei Variante a durch die Tropfengröße (z. B. durch Variation der Geschwindigkeit des Eintropfens) der MOF-Gel-Precusorlösung in das nicht mischbare Fluid und durch die Konzentration der MOF-Gel-Precusorlösung bestimmt. Bei Variante b bestimmen die Porengröße der Matrix und der Schrumpfungsfaktor die Größe der Partikel. Der Schrumpfungsfaktor wird bevorzugt durch das Feststoff-Lösungsmittel-Verhältnis in der MOF-Gel-Precusorlösung eingestellt. Die Partikel enthalten MOF-Primärpartikel, welche im Gel vernetzt sind. Der Durchmesser der Primärpartikel liegt im Nanometerbereich bevorzugt unter 50 nm. Bevorzugt liegt der Durchmesser der annähernd kugelförmigen oder sphäroidalen Partikel unter 10 mm und bevorzugt über 0,1 mm, bevorzugt im Bereich 0,1 bis 5 mm.

Die Partikel sind bevorzugt bindemittelfrei. Bevorzugt enthalten sie unter 1 Gew-%, bevorzugt unter 0,1 Gew. % Bindemittel. Sie enthalten insbesondere keine Silane, Silicate, Graphit, alumniumhaltige Komponenten, Kaolin (oder andere keramische Binder), Polysiloxane, Polymethylmethacrylat, Polyvinylalkohol, Polyacrylsäure, Stärke (oder andere synthetische oder natürliche Polymere) bzw. nur Spuren dieser Komponenten, bevorzugt unter 1 Gew-% bevorzugt unter 0,1 Gew. % (bezogen auf die Summe dieser Komponenten).

Die Partikel sind bevorzugt mikroporös und/oder mesoporös, d. h. die Poren haben bevorzugt einen Durchmesser von < 2 nm bzw. < 50 nm. Das Mikroporenvolumen der Partikel beträgt bevorzugt 0,1-6 cm³/g, besonders bevorzugt 0,3-2,3 cm³/g. Das totale Porenvolumen der Partikel beträgt bevorzugt 0,1-20 cm³/g, besonders bevorzugt 0,5-10 cm³/g. Die BET-Oberfläche liegt bevorzugt im Bereich 50-3000 m²/g, besonders bevorzugt 700-2400 m²/g. Die Bestimmung dieser Parameter erfolgt bevorzugt mittels Stickstoffadsorption (insbesondere nach dem BET-Verfahren nach DIN 66131).

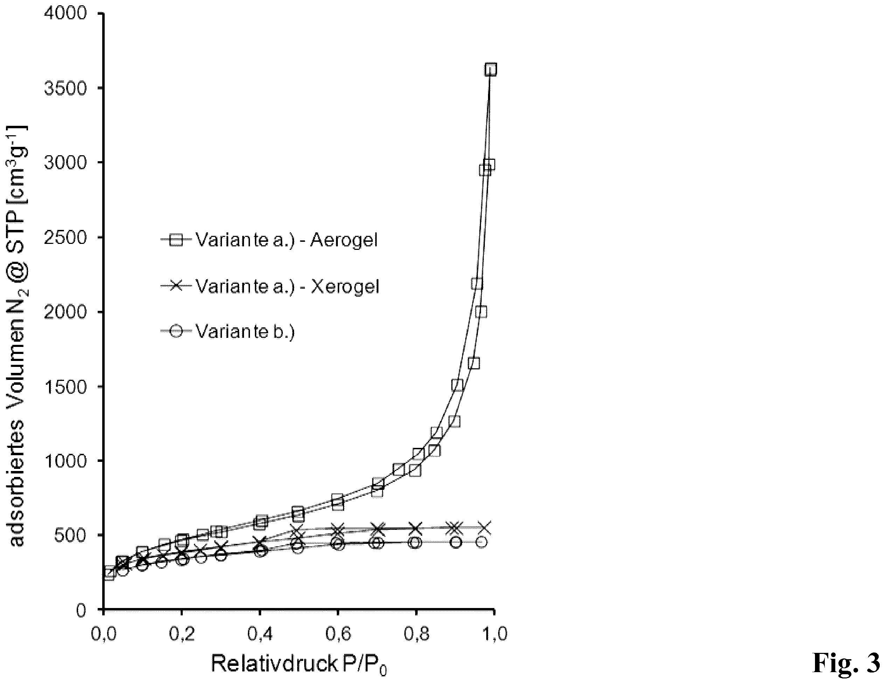

Während aus dem Stand der Technik bekannte kristalline MOF-Partikel in der Regel eine Adsorptionsisotherme vom Typ-1 (nach IUPAC-Klassifizierung, vgl. [K.S.W. Sing, Pure Appl. Chem., 1985, 57(4), 603-619]) aufweisen, was auf reine Mikroporosität hindeutet, zeigen die erfindungsgemäßen Partikel, insbesondere die Aerogele - aber auch die Xerogele - eine zusätzliche, deutliche Porosität im Bereich größerer Poren (Mesoporen für Xerogele, Mesoporen und Makroporen für Aerogele). Vorteilhaft können durch diese zusätzlichen Poren deutlich bessere Adsorptionskinetiken, besonders für größere, monolithische Partikel erzielt werden (siehe auch Fig. 3).

Die erfindungsgemäßen Partikel finden Anwendung bei der Herstellung von Trocken- und Adsorptionsmitteln, Ionentauschern und in der Katalyse, Gasspeicherung, Gastrennprozesse, Medizintechnik, in Biomaterialien, der Sensorik, der Adsorption von toxischen Stoffen (z.B. NH₃) und der Elektronik. Die erfindungsgemäßen Partikel eignen sich insbesondere zur Reinigung oder Abtrennung von Gasen oder zur Entfernung von toxischen Gasen aus Luft.

Anhand folgender Figuren und Ausführungsbeispiele soll die Erfindung näher erläutert werden, ohne die Erfindung auf diese zu beschränken.

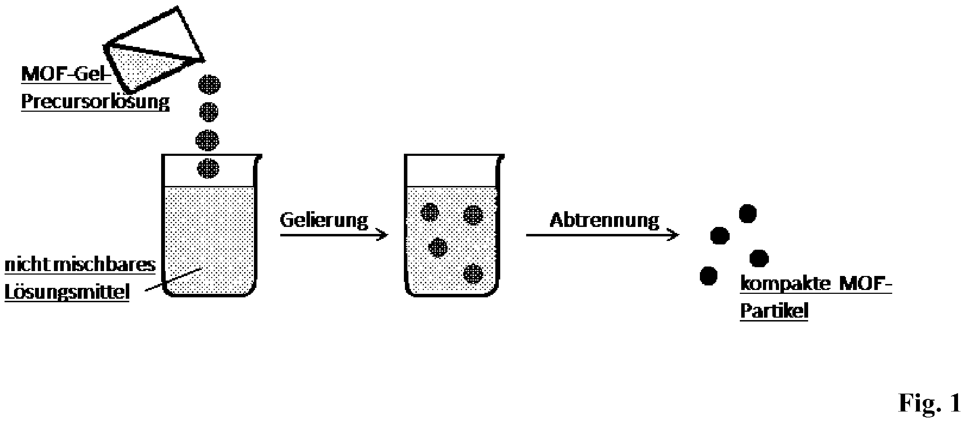

- Fig. 1: skizziert schematisch das Verfahren zur Herstellung der MOF-Partikel durch Eintropfen in eine nicht-mischbare Flüssigkeit.

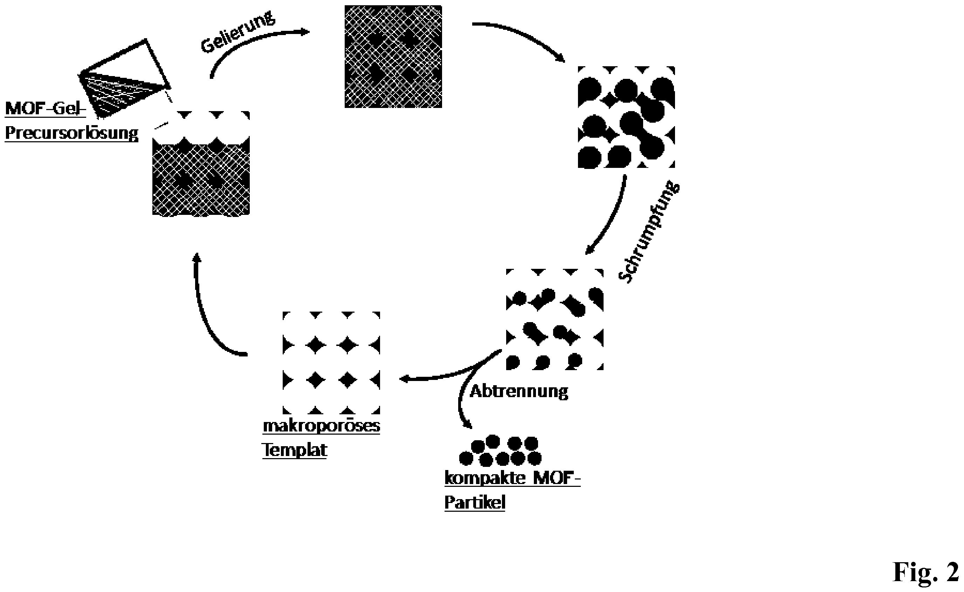

- Fig. 2: skizziert schematisch das Verfahren zur Herstellung der MOF-Partikel mit Hilfe eines makroporösen Templates.
- Fig. 3: zeigt die Isothermen der Stickstoff-Physisorption bei 77K für in der Variante a) des erfindungsgemäßen Verfahrens erzeugte Aerogel- sowie Xerogelpartikel und in der Variante b) des erfindungsgemäßen Verfahrens erzeugte Xerogel-Partikel, jeweils aus Eisen-BTC-Gel. @STP bedeutet bei 0 °C und 100 kPa (Normbedingungen - "Standard Temperature and Pressure").

### Ausführungsbeispiel 1- Variante a - Herstellung durch Eintropfen in nicht mischbare Flüssigkeit.:

1,212 g Eisennitrat-nonahydrat (Fe(NO₃)₃*9H₂O) und 0,42 g Trimesinsäure (H₃BTC) werden separat in 20 ml eines Ethanol-/Wassergemisches (4:1, vol:vol) gelöst und auf -60°C gekühlt. Die kalten Lösungen werden gemischt. Die so erhaltene gekühlte MOF-Gel-Precursorlösung wird daraufhin tropfenweise in Silikonöl mit einer Temperatur von 40°C gegeben. Die so gebildeten, gelierten MOF-Gelkugeln werden anschließend vom Silikonöl getrennt, mit Ethanol gewaschen und wahlweise überkritisch mit CO₂ (Aerogel-Kugeln) oder an Luft bei 70°C (Xerogel-Kugeln) getrocknet.

Die gebildeten Aerogelkugeln weisen eine Oberfläche von 1300±200 m²g⁻¹ (multi-point BET-Bestimmung, p/p₀ von 0,05 bis 0,2), ein Mikroporenvolumen von 0,5±0,1 cm³g⁻¹ und ein totales Porenvolumen von 3,0-10,0 cm³/g⁻¹ (bestimmt bei p/p₀ ≥ 0,99) auf. Die konventionell getrockneten Xerogelkugeln besitzen eine spezifische Oberfläche von 800±400 m²g⁻¹, ein Mikroporenvolumen von 0,4±0,2 cm³g⁻¹ und ein totales Porenvolumen von 0,5±0,3 cm³g⁻¹ (Berechnung s.o.).

Die Aero- und Xerogel-Kugeln wurden anschließend bei Temperaturen bis zu 150°C im Vakuum ausgeheizt, um deren Porenvolumen von Lösungsmittelresten und anderen flüchtigen Stoffen zu befreien. Anschließend wurden jeweils ca. 100 mg der Gelpartikel in eine evakuierte Sorptionsmesszelle gegeben und bei 77K mit definierten Mengen von Stickstoffgas beaufschlagt. Aus der Messung des Drucks in der Messzelle kann das von den Partikeln durch physikalische Kräfte adsorbierte Stickstoffvolumen bestimmt werden. Die Ergebnisse dieser Messungen - das adsorbierte, auf Normbedingungen gemäße DIN 1343 umgerechnete Volumen in Abhängigkeit des Relativdrucks - sind in **Fig. 3** dargestellt und zeigen eine deutliche Porosität der Aerogele und Xerogele im Bereich größerer Poren (Mesoporen für Xerogele, Mesoporen und Makroporen für Aerogele).

### Ausführungsbeispiel 2 - Variante b - Herstellung durch Eingiessen in makroporösen Schaum:

0,5 g Trimesinsäure (H₃BTC) und 1,12 g Aluminiumnitrat-nonahydrat (Al(NO₃)₃*9H₂O) werden in jeweils 30 ml Dimethylformamid (DMF) gelöst. Die Lösungen werden vereinigt und die so erhaltene MOF-Gel-Precursorlösung in einen makroporösen, offenporigen Alumiumschaum (als Templat-Schaum) mit einer Porengrößenverteilung zwischen 3 und 5 mm gegossen (bspw. zylindrischer Schaummonolith in einem verschließbaren Glasgefäß mit Innendurchmesser entsprechend des Schaumaußendurchmessers). Das Templat-Schaum und MOF-Gel-Precursorlösung enthaltende Gefäß wird verschlossen und 12h bei 80-100°C getempert, um die Gelierung der MOF-Gel-Precursorlösung zu ermöglichen. Das erhaltene MOF-Gel-Metallschaum-Komposit wird mit Ethanol gewaschen und anschließend bei 80°C an Luft getrocknet. Die erhaltenen geschrumpften Xerogel-Partikel können danach aus dem Schaumtemplat herausgeschüttelt und das Templat für weitere Partikelherstellung wiederverwendet werden.

Die erhaltenen sphäroidalen Xerogelpartikel weisen eine Oberfläche von 1900±500 m²g⁻¹ (multi-point BET-Bestimmung, p/p₀ von 0,05 bis 0,2), ein Mikroporenvolumen von 0,8±0,3 cm³g⁻¹ und ein totales Porenvolumen von 1,0±0,3 cm³/g⁻¹ (bestimmt bei p/p₀ ≥ 0,99) auf.

Gemäß Variante b) des erfindungsgemäßen Verfahrens gewonnene Xerogelpartikel aus Eisentrimesatgel wurden anschließend - analog zu Ausführungsbeispiel 1 - im Vakuum ausgeheizt und in einer geeigneten Messzelle deren Stickstoff-Physisorption bei 77K bestimmt. Die Ergebnisse dieser Messung sind in Figur 3 dargestellt und zeigen auch für die gemäß Variante b) des erfindungsgemäßen Verfahrens hergestellte Partikel eine Porosität im Bereich größerer Poren.

## Patentansprüche

1. Verfahren zur Herstellung von sphäroidalen Partikeln, die bevorzugt in Form eines getrockneten Gels, insbesondere eines Xerogels oder eines Aerogels vorliegen, enthaltend Metall-Organische Gerüstverbindungen (MOF) durch Gelierung einer MOF-Gel-Precusorlösung, **dadurch gekennzeichnet, dass** die Gelierung
a.) in einem mit der MOF-Gel-Precusorlösung nicht mischbaren Fluid oder
b.) in Poren einer makroporösen Matrix
erfolgt und anschließend eine Trocknung erfolgt.

2. Verfahren nach Anspruch 1, **dadurch gekennzeichnet, dass** die MOF-Gel-Precursorlösung zur Gelierung in das nicht mischbare Fluid eingetropft wird.

3. Verfahren nach Anspruch 2, **dadurch gekennzeichnet, dass** das nicht mischbare Fluid ausgewählt ist aus Silikonen, Alkanen, Alkenen, Fetten, Ölen, Perfluorkohlenwasserstoffen oder Mischungen dieser Flüssigkeiten.

4. Verfahren nach Anspruch 1, wobei die Gelierung in Poren einer makroporösen Matrix erfolgt, **dadurch gekennzeichnet, dass** sich die Größe der Partikel bei der Trocknung verringert, und diese anschließend von der Matrix abgetrennt werden.

5. Verfahren nach Anspruch 4, **dadurch gekennzeichnet, dass** das Abtrennen aus der formgebenden Matrix durch Herausschütteln erfolgt.

6. Verfahren nach Anspruch 4 oder 5, **dadurch gekennzeichnet, dass** die formgebende Matrix eine makroporöse dreidimensionale Struktur, bevorzugt aus Metall, Keramik, Kunstoff, Glas oder Textilien, mit einem bevorzugten Porendurchmesser im Bereich von 0,1-15 mm ist.

7. Sphäroidale Partikel hergestellt nach einem Verfahren gemäß einem der Ansprüche 1 bis 6, **dadurch gekennzeichnet, dass** sie im Gel vernetzte MOF-Primärpartikel aufweisen sowie unter 1 Gew.-%, bevorzugt unter 0,1 Gew.-% Bindemittel enthalten oder bindemittelfrei sind.

8. Partikel nach Anspruch 7, **dadurch gekennzeichnet, dass** sie eine Größe von 0,05 bis 10 mm und/oder ein Mikroporenvolumen von 0,1 bis 6 cm³/g und/oder eine BET-Oberfläche im Bereich 50 bis 3000 m²/g, aufweisen.

9. Verwendung der Partikel nach Anspruch 7 oder 8 zur Reinigung oder Abtrennung von Gasen oder zur Entfernung von toxischen Gasen aus Luft.

## Claims

1. Method for the production of spheroidal particles which are preferably present in the form of a dried gel, in particular a xerogel or an airgel containing metal-organic frameworks (MOF) by gelation of a MOF-gel precursor solution, **characterised in that** the gelation takes place
a.) in a fluid that is immiscible with the MOF-gel precursor solution or
b.) in pores of a macroporous matrix.

2. Method according to claim 1, **characterised in that** the MOF-gel precursor solution is added dropwise to the immiscible fluid to effect the gelation.

3. Method according to claim 2, **characterised in that** the immiscible fluid is selected from silicones, alkanes, alkenes, fats, oils, perfluorohydrocarbons or mixtures of these liquids.

4. Method according to claim 1, wherein the gelation takes place in pores of a macroporous matrix, **characterised in that** the size of the particles decreases during the drying process, and said particles are subsequently separated from the matrix.

5. Method according to claim 4, **characterised in that** the separation from the shaping matrix is performed by shaking out.

6. Method according to claim 4 or 5, **characterised in that** the shaping matrix is a macroporous, three-dimensional structure, preferably made of metal, ceramic, plastic, glass or textiles, with a preferred pore diameter in the range from 0.1-15 mm.

7. Spheroidal particles prepared using a method according to any one of claims 1 to 6, **characterised in that** they contain MOF primary particles that are crosslinked in the gel, and less than 1 wt%, preferably less than 0.1 wt% of binders, or contain contain no binders.

8. Particles according to claim 7, **characterised in that** they have a size from 0.05 to 10 mm and/or a micropore volume from 0.1 to 6 cm³/g and/or a BET surface area in the range from 50 to 3000 m²/g.

9. Use of the particles according to claim 7 or 8 for purifying or seperating gases or for removing toxic gases from air.

## Revendications

1. Procédé destiné à produire des particules sphéroïdales, qui se présentent de préférence sous la forme d'un gel séché, notamment d'un xérogel ou d'un aérogel, contenant des composés structuraux organométalliques (MOF), par gélification d'une solution d'un précurseur de gel MOF, la gélification s'effectuant
a.) dans un fluide non miscible avec la solution de précurseur de gel MOF ou
b.) dans des pores d'une matrice macroporeuse et un séchage ayant lieu par la suite.

2. Procédé selon la revendication 1, **caractérisé en ce que**, pour la gélification, on ajoute au goutte à goutte la solution de précurseur de gel MOF dans le fluide non miscible.

3. Procédé selon la revendication 2, **caractérisé en ce que** le fluide non miscible est choisi parmi des silicones, des alcanes, des alcènes, des graisses, des huiles, des hydrocarbures perfluorés ou des mélanges desdits liquides.

4. Procédé selon la revendication 1, la gélification s'effectuant dans des pores d'une matrice macroporeuse, **caractérisé en ce que** la taille des particules se réduit lors du séchage et qu'on sépare ensuite ces dernières de la matrice.

5. Procédé selon la revendication 4, **caractérisé en ce que** la séparation de la matrice conformatrice s'effectue par retrait par secousses.

6. Procédé selon la revendication 4 ou 5, **caractérisé en ce que** la matrice conformatrice est une structure macroporeuse tridimensionnelle, de préférence en métal, en céramique, en matière plastique, en verre ou en textiles, avec un diamètre préférentiel des pores dans l'ordre de 0,1 à 15 mm..

7. Particules sphéroïdales produites d'après un procédé selon l'une quelconque des revendications 1 à 6, **caractérisées en ce qu'**elles comportent des particules primaires de MOF réticulées dans le gel, ainsi que moins de 1 % en poids, de préférence moins de 0,1 % en poids d'agent liant ou sont exemptes d'agent liant.

8. Particules selon la revendication 7, **caractérisées en ce qu'**elles ont une taille de 0,05 à 10 mm et/ou un volume microporeux de 0,1 à 6 cm³/g et/ou une surface BET dans l'ordre de 50 bis 3000 mm² /g.

9. Utilisation des particules selon la revendication 7 ou 8 pour épurer ou séparer des gaz ou pour éliminer des gaz toxiques de l'air.
